# EUROPEAN PATENT SPECIFICATION

(11) **EP 1 382 878 B1**
(45) Date of publication and mention of the grant of the patent: **30.08.2006**
(21) Application number: 03254439.7
(22) Date of filing: 14.07.2003
(51) Int. Cl.: F16D 65/12

(54) **Brake rotor**
Bremsrotor
Rotor de frein

(30) Priority: 18.07.2002 GB 0216749
(43) Date of publication of application: 21.01.2004
(73) Proprietor: Meritor Heavy Vehicle Systems Cameri SpA, Cameri (Novara) 28062 (IT)
(72) Inventor: Conti, Roberto, 21057 Olglate Olona (VA) (IT)
(74) Representative: Jones, John Bryn

(56) References cited:
- EP-A- 0 512 853
- GB-A- 1 403 828
- US-A- 3 391 763
- US-B1- 6 260 669

## Description

The present invention relates to brake rotors, and in particular brake rotors for use on vehicles especially road vehicles, and in particular heavy road vehicles such as trucks and lorries.

Known brake rotors include a mounting flange having a plurality of circumferentially equally spaced mounting holes. The holes are used to fix the rotor to a wheel hub of the vehicle. The mounting flange includes a circular central hole which fits over various wheel hub components.

However in use, such known brake rotors can develop radial cracks between an inner edge of the mounting holes and the mounting flange central hole.

EP0512853 and GB1403828, considered to represent the closest prior art, both show examples of brake discs having cooling vanes. In each embodiment the vanes are of the same radial extent.

An object of the present invention is to produce a brake rotor which is less susceptible to developing such cracks.

Thus according to the present invention there is provided a brake rotor as defined in claim 1.

It has been found that by providing recesses between each mounting hole, the hoop stresses which develop in use due to differential thermal expansion of different parts of the brake rotor are reduced. In particular the thermal stresses in that part of the brake rotor immediately radially inside each mounting hole can be reduced to an extent whereby cracks no longer form.

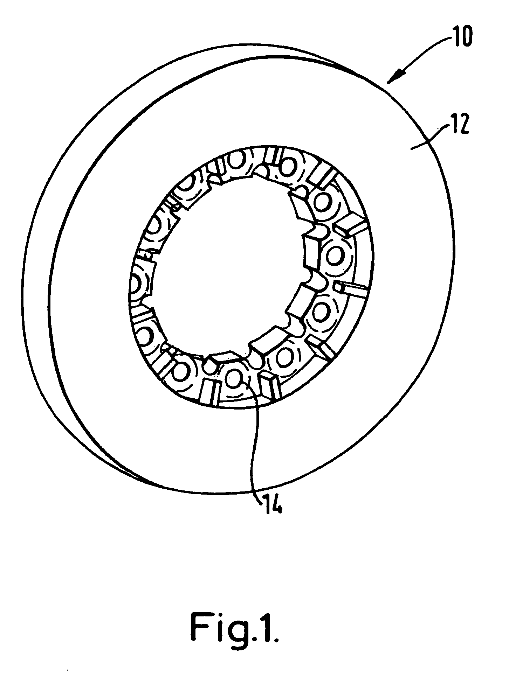

The invention will now be described, by way of example only, with reference to the accompanying drawings in which:-
Figure 1 is an isometric view of a brake rotor according to the present invention,
Figure 2 is an axial view of the rotor of figure 1,
Figure 2A is an enlarged view of figure 2, and
Figure 3 is a cross section view of the rotor of figure 2 taken along the line AA.

With reference to the figures there is shown a brake rotor 10 having an annular disc 12 connected to a generally annular mounting flange 14. In particular, it should be noted that annular disc 12 is connected via annular region 36. Annular region 36 is a continuous annular region. In this case annular region 36 is connected to brake cheek 17.

Annular disc 12 has brake cheek 16 and 17 which are spaced apart by ventilation vanes 18. The brake cheeks 16 and 17 together with the ventilation vanes 18 define ventilation holes 20. Brake cheeks 16 and 17 define braking faces 16A and 17A respectively.

In use, braking faces 16A and 17A rotate within a recess of a known caliper, mounted, typically on suspension components of a vehicle. Known brake pads are mounted within the caliper and are forced into frictional engagement with braking faces 16A and 17A via a known mechanical/pneumatic/hydraulic system to provide a braking force.

The mounting flange 14 includes a plurality (in this case 12) of mounting holes 22. The mounting holes are circumferentially equispaced and have a pitch circle diameter of B, in this case 192 millimetres.

The mounting holes have a nominal diameter of 17 millimetres and thus the inner edges of the mounting holes define a circle of diameter C in this case 175 millimetres.

The mounting flange further defines a radially inner flange wall 24 in the form of an interrupted circle of diameter D, in this case 162 millimetres.

The radially inner flange wall is interrupted by axial recesses in the form of grooves 26 with each groove being positioned circumferentially between adjacent mounting holes.

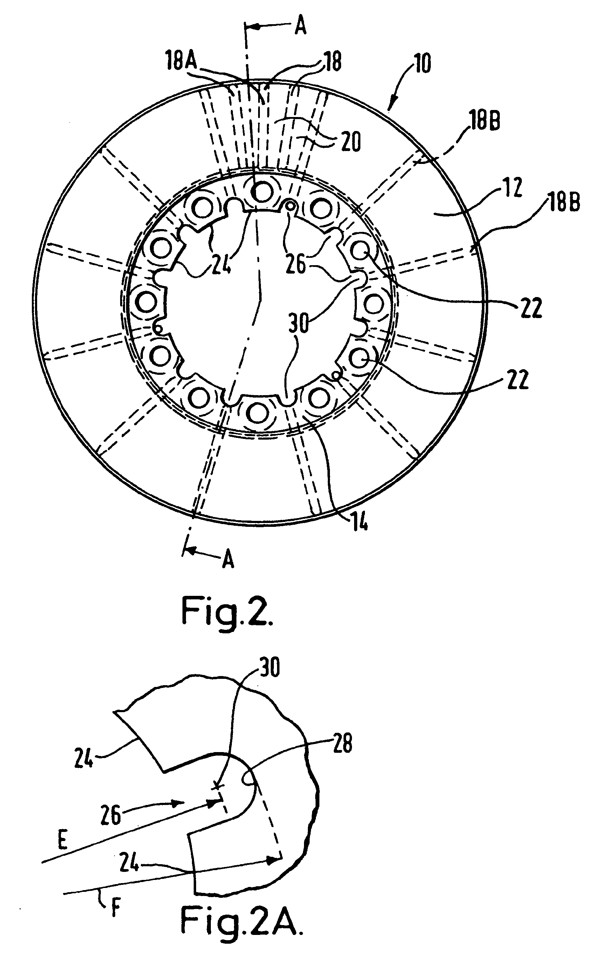

Each groove has a substantially semicircular radially outermost end 28 (see figure 2A) with the centre of the semicircle being shown at 30.

Centres 30 define a circle of diameter E, in this case 170 millimetres.

The radius of the semicircular end of the grooves is 7½ millimetres and thus the radially outer edges of the grooves define a circle of diameter F, in this case 185 millimetres.

The radially innermost edge of cheek 16 is positioned at a diameter G, in this case 234 millimetres.

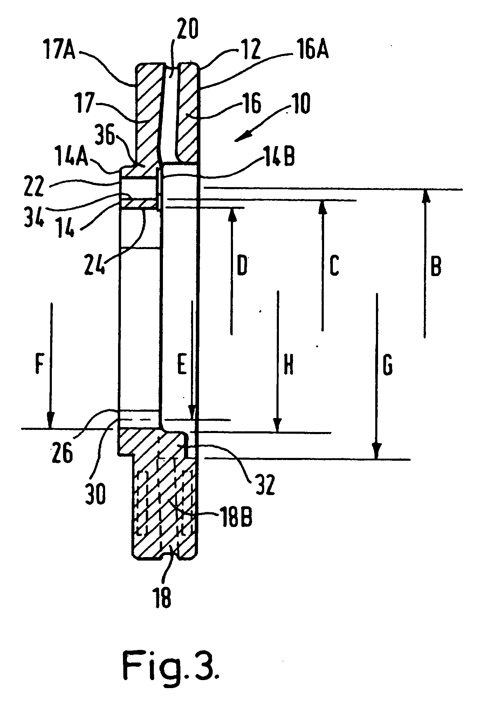

Consideration of figure 2 and the upper half of figure 3 shows that certain ventilation vanes 18A extend radially inwardly only as far as the inner edge of cheek 16.

However, consideration of figure 2 and the lower part of figure 3 show that certain other vanes 18B extend radially inwardly passed the radially inner edge of cheek 16 to a diameter H, in this case approximately 192 millimetres, thus forming an inner vane portion 32. It can be seen that inner vane portion 32 projects axially from the mounting flange 14. Furthermore, it would be appreciated that vanes 18A are circumferentially aligned with an associated groove 26.

In this embodiment the ventilation vanes 18 are all radially orientated. Note however that in further embodiments the ventilation vanes could be curved.

Consideration of figure 3 shows that the mounting flange 14 has axially outwardly orientated faces 14A and 14B. It would be appreciated that mounting flange 14 is offset to the left when viewing figure 3 relative to the annular disc 12.

Furthermore a plane defined by face 14B is situated between the planes defined by brake faces 16A and 17A. Thus mounting flange 14 is offset from, but nevertheless overlaps with, the annular disc 12.

It has been found that by providing the grooves in the position as indicated, the material 34 (see figure 3) situated between the mounting holes and the radially inner flange wall is subject to lower thermal stresses and hence the likelihood of cracking in this region is significantly reduced.

Certain aspects of the geometry of the mounting flange should be noted.

The mounting hole pitch circle diameter B (192 millimetres) is larger than the groove end centre pitch circle diameter E (170 millimetres).

The mounting hole pitch circle diameter B (192 millimetres) is larger than the groove radially outer edge circle diameter F (185 millimetres).

The groove end centre pitch circle diameter E (170 millimetres) is less than the circle diameter C (175 millimetres) defined by the radially innermost portion of the mounting holes.

The diameter of the circle F (185 millimetres) defined by the groove radially outer edges is larger than the diameter of the circle C (175 millimetres) defined by the radially innermost portion of the mounting holes.

The brake rotor including in particular the inner vane portions 32 is typically cast. Whilst the grooves may also be cast, when they are machined, beneficially the groove radially outer edge circle diameter F (185 millimetres) is designed to be smaller than the circle H (192 millimetres) defined by the inner edge of the inner vane portions 32. This allows for machining of the rotor flange without the requirement to machine the inner vane portions 32.

## Claims

1. A brake rotor (10) having an annular disc (12) connected to an annular mounting flange (14), the mounting flange defining a radially inner flange wall (24) and including a plurality of circumferentially spaced mounting holes (22), in which the flange wall includes a plurality of recesses (26), with each recess situated circumferentially between adjacent mounting holes in which the brake rotor includes ventilation vanes (18) between opposing braking faces (16A, 17A) of the annular disc, **characterised in that** the ventilation vanes (18) define a first set of ventilation vanes (18A) and a second set of ventilation vanes (18B) with the second set of ventilation vanes (18B) extending radially inwardly further than said first set of ventilation vanes (18A) in which the second set of ventilation vanes (18B) includes inner vane portions (32) which extend inwardly of a radially inner edge of the annular disc in which the radially inner edges of said inner vane portions (32) define a circle having a diameter (H), and the mounting holes define a mounting hole pitch circle diameter (B) that is substantially the same as the diameter (H) of the circle defined by the radially inner edges of said inner vane portions and said inner vane portions (32) project axially from the mounting flange (14).

2. A brake rotor as defined in claim 1 in which said inner vane portions (32) are substantially radially in line with the recess.

3. A brake rotor as defined in any preceding claim in which the recesses in the form of grooves have radially outer edges defining a groove radially outer edge circle having a diameter (F) that is less than the diameter (H) of the circle defined by the radially inner edges of said inner vane portions.

4. A brake rotor as defined in any preceding claim in which the mounting holes have radially inner edges defining a mounting hole radially inner edge circle having a diameter (C) that is less than the diameter (H) of the circle defined by the radially inner edges of said inner vane portions.

5. A brake rotor as defined in any preceding claim in which each recess is in the form of an axially orientated groove.

6. A brake rotor as defined in claim 5 in which the grooves have a substantially semicircular radially outermost end, with each end having a centre, the centres defining a groove end centre pitch circle diameter (E).

7. A brake rotor as defined in claim 6 in which said groove end centre pitch circle diameter (E) is less than the diameter (H) of the circle defined by the radially inner edges of said inner vane portions.

8. A brake rotor as defined in any preceding claim in which the annular disc is axially offset relative to the annular mounting flange.

9. A brake rotor as defined in claim 8 in which the annular disc axially overlaps the annular mounting flange.

## Patentansprüche

1. Bremsrotor (10) mit einer ringförmigen Scheibe (12), die mit einem ringförmigen Befestigungsflansch (14) verbunden ist, der eine radial innere Flanschwand (24) definiert und eine Vielzahl von am Umfang im Abstand voneinander angeordneten Befestigungslöchern (22) aufweist, wobei die Flanschwand eine Vielzahl von Ausnehmungen (26) aufweist, die jeweils am Umfang zwischen benachbarten Befestigungslöchern gelegen sind, wobei der Bremsrotor Belüftungsschaufeln (18) zwischen einander gegenüberliegenden Bremsflächen (16A, 17A) der ringförmigen Scheibe aufweist, **dadurch gekennzeichnet, dass** die Belüftungsschaufeln (18) einen ersten Satz von Belüftungsschaufeln (18A) und einen zweiten Satz von Belüftungsschaufeln (18B) definieren, wobei sich der zweite Satz von Belüftungsschaufeln (18B) weiter radial einwärts erstreckt als der erste Satz von Belüftungsschaufeln (18A), wobei der zweite Satz von Belüftungsschaufeln (18B) innere Schaufelabschnitte (32) aufweist, die sich von einem radial inneren Rand der ringförmigen Scheibe nach innen erstrecken, wobei die radial inneren Ränder der inneren Schaufelabschnitte (32) einen Keis mit einem Durchmesser (H) definieren, und wobei die Befestigungslöcher einen Befestigungslochkreisdurchmesser (B) definieren, der im Wesentlichen identisch ist mit dem Durchmesser (H) des durch die radial inneren Ränder der inneren Schaufelabschnitte definierten Kreises, und die inneren Schaufelabschnitte (32) axial von dem Befestigungsflansch (14) hervorstehen.

2. Bremsrotor nach Anspruch 1, bei dem die inneren Schaufelabschnitte (32) im Wesentlichen radial mit den Ausnehmungen fluchten.

3. Bremsrotor nach einem der vorhergehenden Ansprüche, bei dem die Ausnehmungen in Form von Nuten radial äußere Ränder aufweisen, die einen radial äußeren kreisrunden Nutrand mit einem Durchmesser (F) definieren, der kleiner ist als der Durchmesser (H) des von den radial inneren Rändern der inneren Schaufelabschnitte definierten Kreises.

4. Bremsrotor nach einem der vorhergehenden Ansprüche, bei dem die Befestigungslöcher radial innere Ränder aufweisen, die einen radial inneren kreisrunden Befestigungslochrand mit einem Durchmesser (C) definieren, der kleiner ist als der Durchmesser (H) des durch die radial inneren Ränder der inneren Schaufelabschnitte definierten Kreises.

5. Bremsrotor nach einem der vorhergehenden Ansprüche, bei dem jede Ausnehmung die Form einer axial ausgerichteten Nut hat.

6. Bremsrotor nach Anspruch 5, bei dem die Nuten ein im Wesentlichen halbkreisförmiges radial äußerstes Ende aufweisen, wobei jedes Ende einen Mittelpunkt aufweist und die Mittelpunkte einen Lochkreisdurchmesser (E) der Mittelpunkte der Nutenden definieren.

7. Bremsrotor nach Anspruch 6, bei dem der Lochkreisdurchmesser (E) der Mittelpunkte der Nutenden kleiner ist als der Durchmesser (H) des durch die radial inneren Ränder der inneren Schaufelabschnitte definierten Kreises.

8. Bremsrotor nach einem der vorhergehenden Ansprüche, bei dem die ringförmige Scheibe relativ zu dem ringförmigen Befestigungsflansch axial versetzt ist.

9. Bremsrotor nach Anspruch 8, bei dem die ringförmige Scheibe den ringförmigen Befestigungsflansch axial überlappt.

## Revendications

1. Rotor de frein (10) comportant un disque annulaire (12) raccordé à une bride de montage annulaire (14), la bride de montage définissant une paroi de bride radialement intérieure (24) et comprenant une pluralité de trous de montage espacés sur la circonférence (22), dans lequel la paroi de bride comprend une pluralité d'évidements (26), chaque évidement étant placé sur la circonférence entre des trous de montage adjacents, dans lequel le rotor de frein comprend des ailettes de ventilation (18) entre des faces de freinage opposées (16A, 17A) du disque annulaire, **caractérisé en ce que** les ailettes de ventilation (18) définissent un premier ensemble d'ailettes de ventilation (18A) et un deuxième ensemble d'ailettes de ventilation (18B), le deuxième ensemble d'ailettes de ventilation (18B) s'étendant radialement vers l'intérieur plus loin que ledit premier ensemble d'ailettes de ventilation (18A), dans lequel le deuxième ensemble d'ailettes de ventilation (18B) comprend des parties d'ailettes intérieures (32) qui s'étendent vers l'intérieur d'un bord radialement intérieur du disque annulaire, dans lequel les bords radialement intérieurs desdites parties d'ailettes intérieures (32) définissent un cercle ayant un diamètre (H) et les trous de montage définissent un diamètre de perçage des trous de montage (B) qui est sensiblement le même que le diamètre (H) du cercle défini par les bords radialement intérieurs desdites parties d'ailettes intérieures et lesdites parties d'ailettes intérieures (32) font saillie axialement à partir de la bride de montage (14).

2. Rotor de frein selon la revendication 1, dans lequel lesdites parties d'ailettes intérieures (32) sont sensiblement radialement alignées avec l'évidement.

3. Rotor de frein selon l'une quelconque des revendications précédentes, dans lequel les évidements sous forme de rainures ont des bords radialement extérieurs définissant un cercle de bord radialement extérieur de rainure ayant un diamètre (F) qui est inférieur au diamètre (H) du cercle défini par les bords radialement intérieurs desdites parties d'ailettes intérieures.

4. Rotor de frein selon l'une quelconque des revendications précédentes, dans lequel les trous de montage ont des bords radialement intérieurs définissant un cercle de bord radialement intérieur de trou de montage ayant un diamètre (C) qui est inférieur au diamètre (H) du cercle défini par les bords radialement intérieurs desdites parties d'ailettes intérieures.

5. Rotor de frein selon l'une quelconque des revendications précédentes, dans lequel chaque évidement se présente sous forme d'une rainure orientée axialement.

6. Rotor de frein selon la revendication 5, dans lequel les rainures ont une extrémité radialement extérieure sensiblement semi-circulaire, chaque extrémité ayant un centre, les centres définissant un diamètre de perçage de l'extrémité de rainure (E).

7. Rotor de frein selon la revendication 6, dans lequel ledit diamètre de perçage de l'extrémité de rainure (E) est inférieur au diamètre (H) du cercle défini par les bords radialement intérieurs desdites parties d'ailettes intérieures.

8. Rotor de frein selon l'une quelconque des revendications précédentes, dans lequel le disque annulaire est décalé axialement par rapport à la bride de montage annulaire.

9. Rotor de frein selon la revendication 8, dans lequel le disque annulaire chevauche axialement la bride de montage annulaire.
